# EUROPEAN PATENT SPECIFICATION

(11) **EP 2 979 577 B1**
(45) Date of publication and mention of the grant of the patent: **05.07.2023**
(21) Application number: 15178125.9
(22) Date of filing: 23.07.2015
(51) Int. Cl.: A46B 3/18, A46B 5/00, A46B 15/00

(54) **FLEXIBLE INTERDENTAL CLEANING DEVICE**
FLEXIBLE ZAHNZWISCHENRAUMREINIGUNGSVORRICHTUNG
DISPOSITIF DE NETTOYAGE INTERDENTAIRE SOUPLE

(30) Priority: 01.08.2014 GB 201413702
(43) Date of publication of application: 03.02.2016
(73) Proprietor: Wisdom Toothbrushes Limited, Suffolk CB9 8DT (GB)
(72) Inventor: Morris, Philip Michael, Nr Bishops Stortford Herts CM23 1JA (GB); Mayne, Anthony John, Colchester Essex CO4 3AR (GB)
(74) Representative: Boult Wade Tennant LLP

(56) References cited:
- WO-A1-94/21152
- WO-A1-2012/011574
- GB-A- 2 381 444
- US-A- 5 150 495
- US-A1- 2010 050 358

## Description

In the field of dental hygiene, it is known to provide devices intended specifically for cleaning spaces between the teeth. One such suitable device is an interdental cleaning device. The interdental cleaning device may comprise a brush.

Interdental cleaning devices often comprise a twisted wire with fine brush fibres extending radially from the twisted wire. The interdental cleaning device may further comprise a neck from which the twisted wire extends. The interdental cleaning device may further comprise a handle extending from the neck at an opposite end from the twisted wire brush. Such an arrangement is by contrast with a conventional toothbrush which comprises a plurality of substantially mutually parallel brush elements extending from a substantially planar surface of a toothbrush head.

It is also known to provide some flexibility in the neck of an interdental cleaning device in order to increase usability in those interdental spaces in a user's mouth that may be difficult to access with a rigid interdental cleaning device.

A known interdental cleaning device is disclosed in US 5,488, 751, in the name of John O. Butler Company, which shows a device having a twisted wire brush portion and a neck with concentric diametric grooves to allow some flexibility.

WO 2012/011574 discloses an interdental brush having a head that can flex relative to its handle. GB 2381444 discloses a complex oral hygiene device with suction functionality intended for bed-ridden users. US 5150495 discloses a disposable dental brush for applying various dental materials onto a tooth in thin even coatings. US 2010/050358 discloses an interdental brush with a bending portion. WO 94/21152 discloses an interproximal brush having a brush member that extends from a rigid boss disposed between a pair of slidable leg members.

There exists a need for an improved interdental cleaning device having increased flexibility of the brush relative to a portion of the device held by the user combined with increased durability.

Against this background there is provided an interdental device comprising:
an interdental cleaning element comprising a spinal member extending along an elongate axis; and
a flexible neck extending along the elongate axis and into which an end of the spinal member is received,
wherein the flexible neck comprises a plurality of hinges, the plurality of hinges comprising:
   a first hinge configured to enable bending of the flexible neck in a first direction perpendicular to the elongate axis; and
   a second hinge axially displaced from the first hinge and configured to enable bending of the flexible neck in a second direction perpendicular to the elongate axis;
the spinal member extends into the flexible neck to an extent such that it extends beyond at least half of the plurality of hinges.

This allows for increased flexibility combined with increased durability through reduced stress in the interdental cleaning element. The nature of the multiple hinges is such as to enable increased flexibility of the interdental cleaning element relative to a handle of the interdental device and a reduced likelihood of the interdental cleaning element becoming deformed or snapping away from the neck.

The second direction may be radially offset with respect to the first direction. This increases the ability of the user to access otherwise difficult to reach interdental areas.

The second direction may be perpendicular or substantially perpendicular to the first direction.

The first hinge may comprise a first cross sectional narrowing of the flexible neck in the first direction; and the second hinge comprises a second cross sectional narrowing of the flexible neck in the second direction.

The first and second cross sectional narrowings may be tapered. More particularly, the first and second cross sectional narrowings may be V-shaped.

The interdental device may further comprise:
a third hinge configured to enable bending of the flexible neck in a third direction; and
a fourth hinge axially displaced from the third hinge and configured to enable bending of the flexible neck in a fourth direction.

This increases the ability of the user to access otherwise difficult to reach interdental areas.

The fourth direction may be radially offset with respect to the third direction.

Moreover, the fourth direction may be perpendicular or substantially perpendicular to the third direction.

The third direction may be parallel to the first direction and the fourth direction may be parallel to the second direction.

The first hinge may be closer to the interdental cleaning element than the second hinge and, where present, the third and fourth hinges, and wherein the spinal member may not extend as far as the hinge furthest from the first hinge.

The spinal member may extend into the flexible neck to an extent beyond the first hinge and the second hinge.

The spinal member may extend into the flexible neck to an extent beyond the first hinge, the second hinge, the third hinge and the fourth hinge.

The spinal member may extend into the flexible neck to an extent beyond both the first hinge and the second hinge and may terminate in line with the third hinge such that it does not extend as far as the fourth hinge.

A tip of the flexible neck that is furthest from the handle and into which the end of the spinal member is received may be tapered such that its diameter increases in a direction towards the handle.

The spinal member may comprise a twisted wire portion.

The interdental cleaning element may comprise a plurality of brush elements extending radially from the spinal member.

The brush elements may be affixed between elements of the twisted wire portion.

The interdental cleaning element may comprise brush elements of any one or more of the following: nylon; polyester; thermoplastic elastomer; polypropylene; flock; cloth; and silicone.

The interdental device may further comprise a handle portion extending from the flexible neck in a direction away from the interdental cleaning element.

The handle portion, or at least a part of the handle portion, may be co-moulded with the flexible neck.

Specific embodiments are now described with reference to the accompanying drawings in which:
Figure 1 shows a perspective view of an interdental device in accordance with a first embodiment of the invention;
Figure 2 shows a top view of the interdental device of the first embodiment;
Figure 3 shows a side view of the interdental device of the first embodiment;
Figure 4 shows a side view of the interdental device of the first embodiment wherein the interdental device is in a flexed condition;
Figure 5 shows a cross-sectional view of a part of the interdental device of the first embodiment;
Figure 6 shows a top view of a part of the interdental device of the first embodiment;
Figure 7 shows an interdental cleaning element of the first embodiment that comprises a twisted wire radial nylon brush fibres;
Figure 8 shows a top view of an interdental device of a second embodiment;
Figure 9 shows a top view of a part of the interdental device of the second embodiment;
Figure 10 shows a cross-sectional view of a part of the interdental device of the second embodiment;
Figure 11 shows a cross-sectional view of a part of the interdental device of a third embodiment;
Figure 12 shows a perspective view of the interdental device of the second embodiment wherein all components other than the interdental cleaning element 10 are shown in cross-section; and
Figure 13 shows a perspective view of the interdental device of the third embodiment wherein all components other than the interdental cleaning element 10 are shown in cross-section.

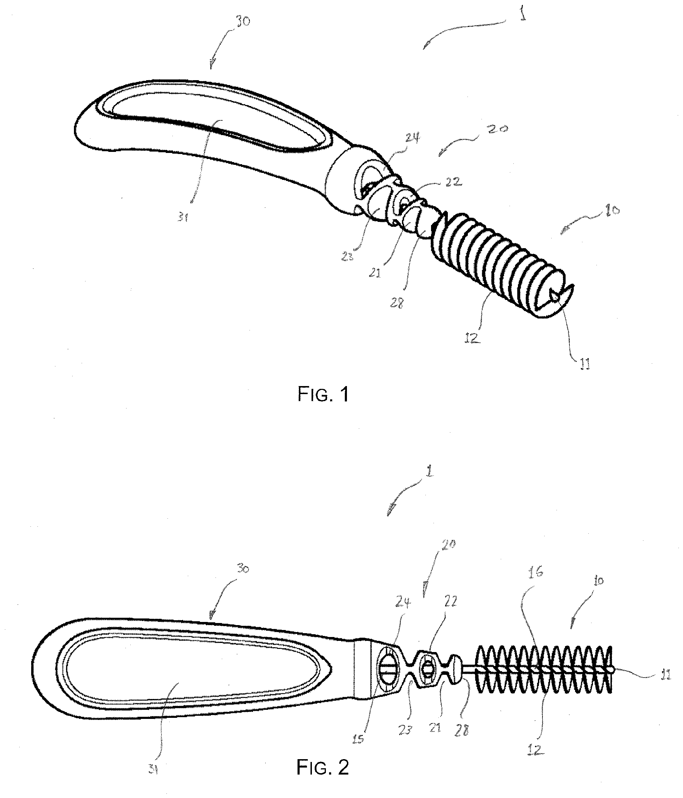

Figure 1 shows an interdental device 1 in accordance with a first embodiment of the invention. As will be immediately apparent to the skilled person, however, other interdental devices fall within the scope of the appended claims and the disclosure is not to be limited to the first embodiment.

The interdental device 1 of the first embodiment illustrated herein comprises an interdental cleaning element 10, a flexible neck 20 and a handle 30. A proximal portion 15 of the interdental cleaning element 10 is received into an axial core of the neck 20 and extends therethrough. A distal portion 16 of the interdental cleaning element 10 extends longitudinally from the neck 20. The handle 30 is located at an opposite end of the neck 20 from the interdental cleaning element 10. The handle 30 comprises an aperture 31 to assist the user in manipulating the interdental device 1. The handle 30 may comprise a rubbery surface to aid the user in gripping the interdental device 1.

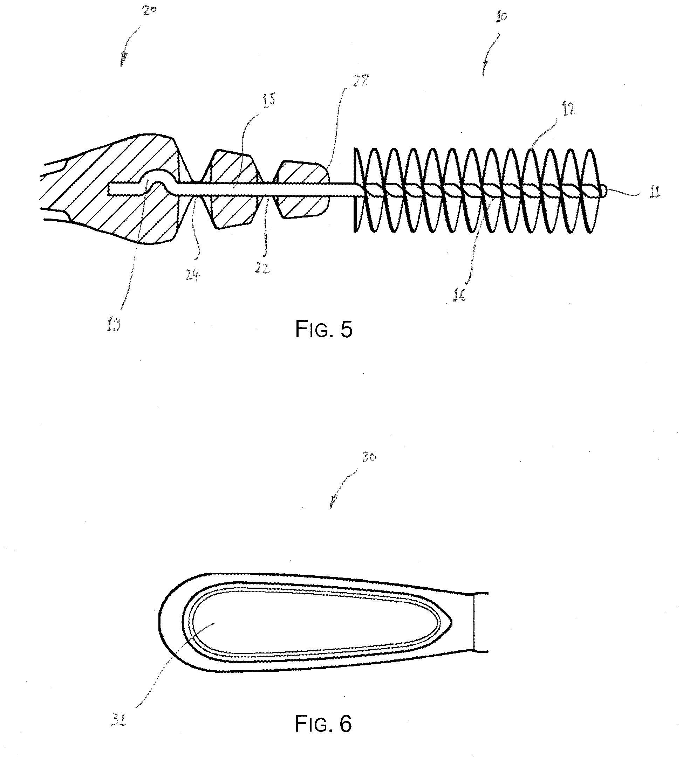

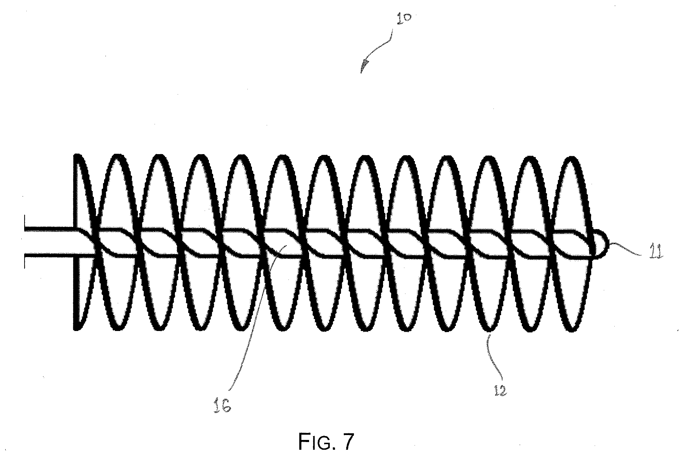

The interdental cleaning element 10 of the first embodiment comprises a spinal member comprising an elongate twisted wire 11, shown in enlarged fashion in Figures 5 and 7. The elongate twisted wire 11 is formed of a strand of wire having a 180 ° bend at an end of the distal portion 16 of the interdental cleaning element 10. Adjacent the 180 ° bend are two legs of the strand of wire, one either side of the bend, and each leg is twisted around the other to form a twisted wire pair. Strands of nylon fibre are trapped between the twisted wire pair along some, most or all of the distal portion 16. Towards an end of the proximal portion 15 there is a kink 19 in the proximal portion 15 to effectively provide additional anchorage of the interdental cleaning element 10 to the neck 20.

The flexible neck 20 comprises, in the first embodiment, four hinges. All four hinges enable hinging that is perpendicular to the axial direction. A first hinge 21 is located closest to a tip 28 of the neck 20 from which the interdental cleaning element 10 projects. A second hinge is located axially adjacent the first hinge 21 in a direction away from the tip 28 of the neck 20. The first hinge 21 enables hinging in a first direction and the second hinge 22 enables hinging in a second direction 22. The first and second directions are each perpendicular to the axial direction and perpendicular to each other. A third hinge 23 is located axially adjacent the second hinge 22 in a direction away from the tip 28 of the neck 20. A fourth hinge 24 is located axially adjacent the third hinge 23 in a direction away from the tip 28 of the neck 20. The third hinge 23 enables hinging in a third direction and the fourth hinge 24 enables hinging in a fourth direction 24. The third and fourth directions are each perpendicular to the axial direction and perpendicular to each other. In the first embodiment, the third direction is parallel to the first direction and the fourth direction is parallel to the second direction. This is not essential, however, and it may be, for example, that the third direction is located at 45 ° from the first and second directions and the fourth direction is located at 45 ° from the first and second directions and 90 ° from the third direction.

The flexible neck 20 has a generally tapering form towards its tip 28. As such, each of the hinges 24, 23, 22, 21 is smaller than the previous in a direction towards the tip 28.

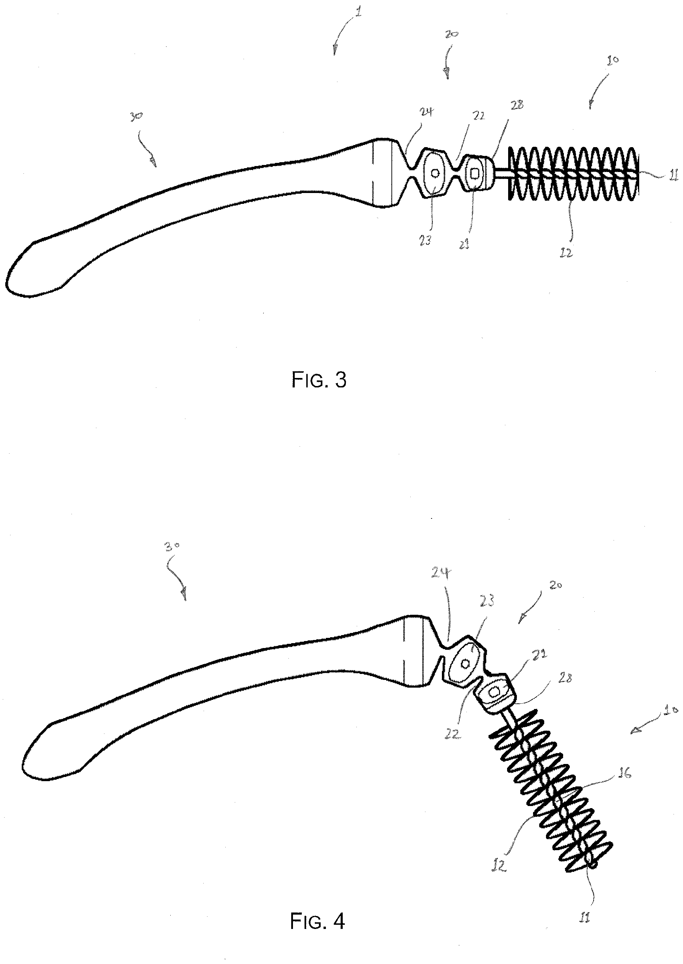

Each of the hinges 21, 22, 23, 24 may be formed by a narrowing of the profile of the neck 20 in a direction parallel to the direction of hinging. Effectively, each hinge 21, 22, 23, 24 comprises a pair of V-shaped segments, one on each side of the neck 20. In this way, hinging is enabled by altering the angle between the two arms of the V on one side to be more acute and by altering the angle between the two arms of the V on the opposite side to be less acute. In addition, as can be seen most clearly in Figures 2 to 4, each hinge may comprise an aperture that runs through the centre of the neck 20 from one V to the opposite V. The aperture further reduces the cross-sectional area of the neck in the portion of each hinge and thereby assists in the flexibility made possible by the hinge. As can be seen in Figure 2, the twisted wire 11 of the interdental cleaning device 1 of the first embodiment passes through the aperture as it extends along the axial core of the neck 20.

In the interdental cleaning device 1 of the first embodiment, the twisted wire 11 of the proximal portion 15 of the interdental cleaning element 10 projects through the axial core of the neck 20 through all four hinges 21, 22, 23, 24 of the flexible neck 20. The kink 19 in the twisted wire 11 of the proximal portion 15 is located within the neck 20 at a location beyond the hinge furthest from the tip 28 of the neck 20. As such, the twisted wire 11 extends within, and is effectively protected by, the portion of the neck 20 in which the hinges 21, 22, 23, 24 are located. The twisted wire 11 is anchored axially relative to the neck 20 by the kink 19 beyond the portion of the neck 20 in which the hinges 21, 22, 23, 24 are located. In this way, the twisted wire 11 is supported by the portion of the neck 20 in which the hinges 21, 22, 23, 24 are located. Moreover, the ability to bend the twisted wire 11 at a particular axial location is restricted to that achievable within the V-shaped segment at that location. This increases the durability of the interdental device.

In alternative embodiments, the twisted wire 11 of the proximal portion 15 of the interdental cleaning element 10 may project through the axial core of the neck 20 through fewer than all of the hinges. In the event that the twisted wire 11 of the proximal portion 15 of the interdental cleaning element 10 projects through the axial core of the neck 20 through all of the hinges, it may or may not extend into the handle 30.

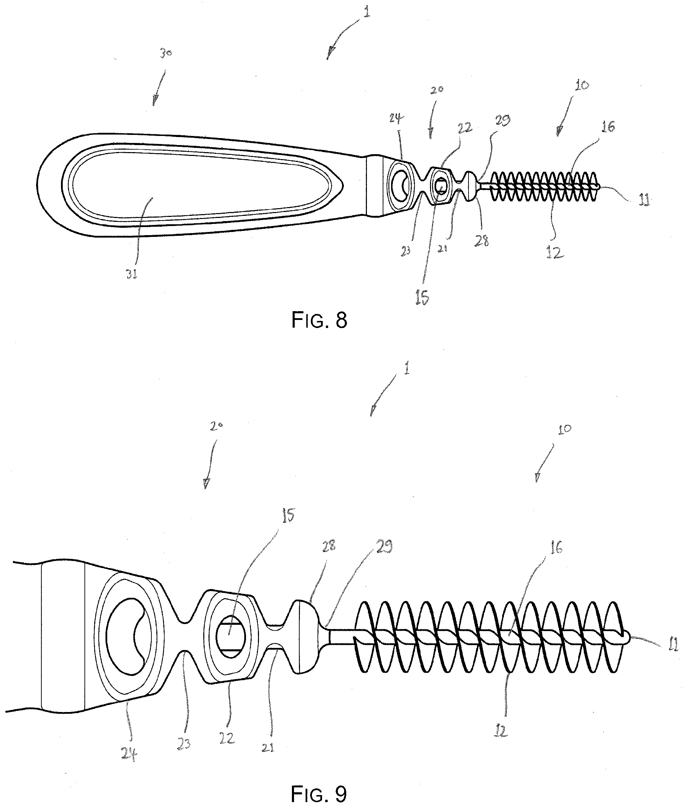

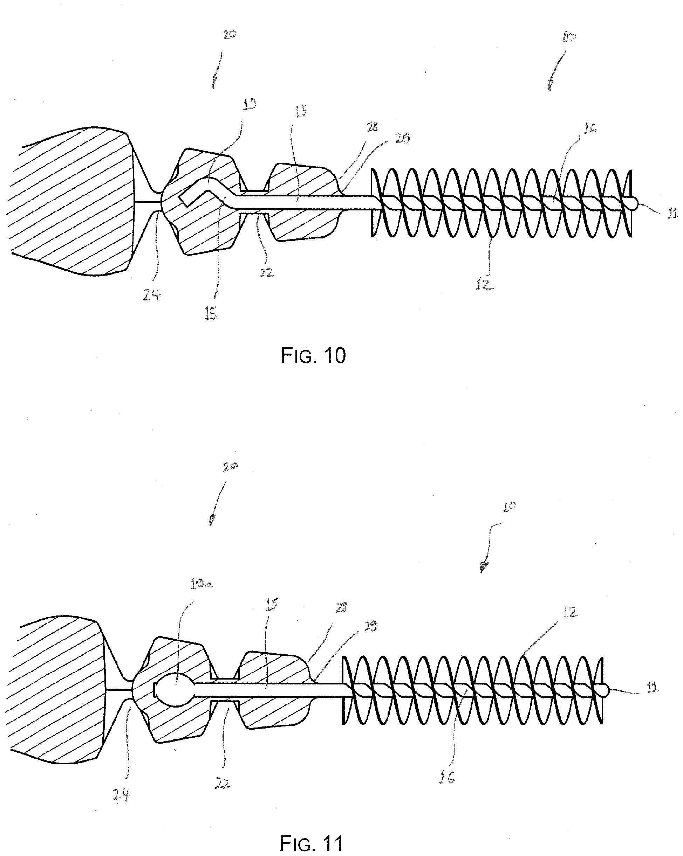

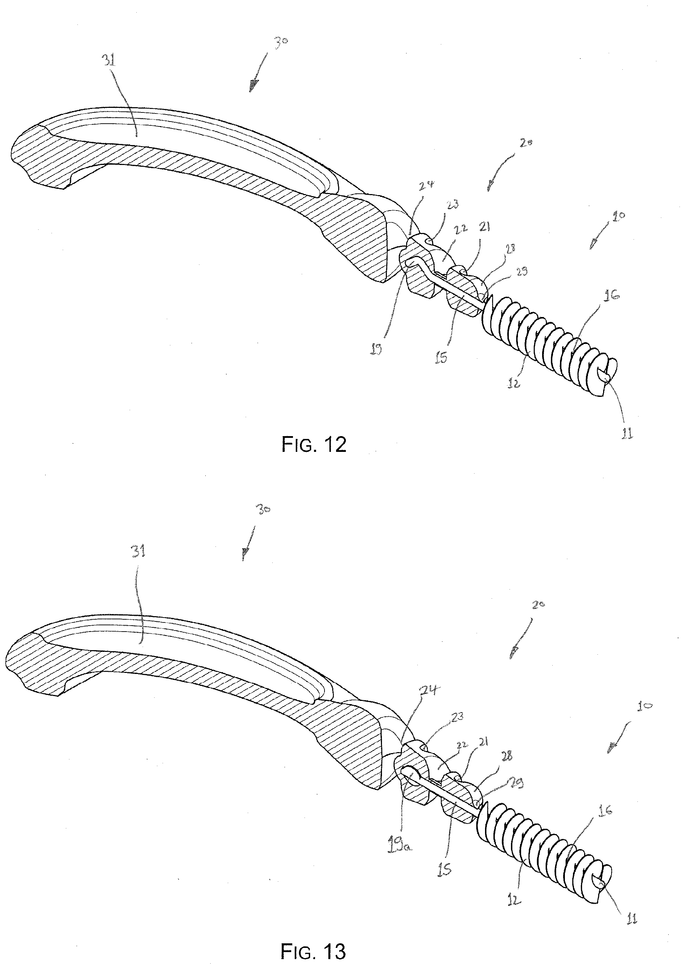

An interdental cleaning device 1 of a second embodiment is illustrated in Figures 8 to 10 and 12. As is apparent from all of these Figures, the interdental cleaning device 1 of the second embodiment differs from that of the first embodiment in that the twisted wire 11 of the proximal portion 15 of the interdental cleaning element 10 projects through the axial core of the neck 20 through some but not all of the hinges. In particular, the twisted wire 11 of the proximal portion 15 of the interdental cleaning element 10 ends parallel with the third hinge 23. It may be, however, that other terminating points for the hinge are appropriate. As is illustrated in Figures 10 and 12, the kink 19 towards an end of the proximal portion 15 of the twisted wire 11 which provides additional anchorage of the interdental cleaning element 10 to the neck 20 is located in line with the third hinge 23. The kink 19 extends in a direction perpendicular to the axial direction and between the narrowings of the third hinge 23. While the illustration shows the kink 19 being located in line with the third hinge 23, it may terminate adjacent any of the other hinges.

An interdental cleaning device 1 of a third embodiment is illustrated in Figures 11 and 13. This differs from the second embodiment in that the additional anchorage of the interdental cleaning element 10 to the neck 20 is provided by a bulb-shaped portion 19a towards an end of the proximal portion 15 of the twisted wire 11. The bulb-shaped portion 19a extends in a direction perpendicular to the axial direction and between the narrowings of the third hinge 23. The bulb-shaped portion 19a may comprise a deformed portion of the twisted wire 11, potentially achieved by deforming the wire into a narrower but wider volume than the undeformed wire. While the illustration shows the bulb-shaped portion 19a being located in line with the third hinge 23, it may terminate adjacent any of the other hinges.

Both the second and the third embodiments also differ from the first embodiment in that the tip 28 of the neck 20 includes a tapered portion 29. The tapered portion 29 is such that the portion of the tip 28 furthest from the handle is only marginally of larger diameter than the twisted wire, and the tapered portion increases in diameter in the direction of the handle 30. In this way, stress on the twisted wire 11 caused by radial movement of the twisted wire 11 is extended axially through the tapered portion rather than being incurred in a narrow axial region adjacent an untapered neck 20. This feature may also be employed in the interdental cleaning device 1 of the first embodiment.

An embodiment of an interdental cleaning device having a particularly advantageous combination of features comprises a flexible neck 20 having first, second, third and fourth hinges 21, 22, 23, 24 wherein the twisted wire 11 of the proximal portion 15 of the interdental cleaning element 10 extends into the flexible neck 20 to an extent beyond the first hinge 21 and the second hinge 22 and terminates in line with the third hinge 23 such that it does not extend as far as the fourth hinge 24 and further includes the tip 28 of the neck 20 having tapered portion 29. In particular, this combination provides a significant degree of flexibility whilst at the same time providing a robust device wherein stress on the twisted wire 11 extends axially along its length which reduces risk of failure of the twisted wire 11 at any particular location.

Alternative interdental cleaning elements 10 to those described with respect to the preferred embodiments may be equally applicable to the invention. For example, the interdental cleaning element 10 may comprise strands of any of the following materials in addition to or in place of nylon: polyester, thermoplastic elastomer; polypropylene; flock; cloth and silicone.

Furthermore, the interdental cleaning element 10 may comprise one or more chemical or mineral additives, including but not limited to the following: zinc citrate; ceptylpyridium chloride (CPC); silver ions; chlorohexidene; triclosan; flavour (e.g. mint); anti-bacterial agents; and cleaning agents.

A further advantage of the interdental device 1 according to the claimed invention is the ease of its manufacture. Manufacture of the neck 20 and handle portion 30 can be achieved by single-material injection moulding. This minimises the number of manufacturing steps and the necessary manufacturing equipment, such as moulds. Alternatively, manufacture of the neck 20 and handle portion 30 can be achieved by multi-material injection moulding. The neck 20 and handle portion 30 may comprise, but is not limited to, a thermoplastic or thermoset material, e.g. polypropylene, thermoplastic elastomer, polyethylene, silicone or any polymer having the material properties necessary for the creation of an integral hinge. A twisted wire 11 interdental cleaning element 10 can be produced by well-known manufacturing techniques. The proximal portion 15 of the twisted wire 11 can then be embedded into the core of the neck 20 that can be moulded as a single piece around the twisted wire 11 and so as to include a handle 30.

As will be clear to the skilled person, the advantages provided by the invention as claimed are not limited to the specifically first embodiment. For example, the number and orientation of the hinges may be altered whilst still falling within the scope of the claims. Furthermore, the nature of the interdental cleaning element 10 and handle 30 may vary widely while still falling within the scope of the claims.

## Claims

1. An interdental device comprising:
an interdental cleaning element comprising a spinal member extending along an elongate axis; and
a flexible neck extending along the elongate axis and into which an end of the spinal member is received,
wherein the flexible neck comprises a plurality of hinges, the plurality of hinges comprising:
a first hinge configured to enable bending of the flexible neck in a first direction perpendicular to the elongate axis; and
a second hinge axially displaced from the first hinge and configured to enable bending of the flexible neck in a second direction perpendicular to the elongate axis;
wherein the spinal member extends into the flexible neck to an extent such that it extends beyond at least half of the plurality of hinges.

2. The interdental device of claim 1 wherein the second direction is radially offset with respect to the first direction and, optionally, wherein the second direction is perpendicular or substantially perpendicular to the first direction.

3. The interdental device of any preceding claim wherein:
the first hinge comprises a first cross sectional narrowing of the flexible neck in the first direction; and
the second hinge comprises a second cross sectional narrowing of the flexible neck in the second direction and, preferably,
wherein the first and second cross sectional narrowings are tapered, more preferably V-shaped.

4. The interdental device of any preceding claim further comprising a third hinge configured to enable bending of the flexible neck in a third direction.

5. The interdental device of claim 4 further comprising a fourth hinge axially displaced from the third hinge and configured to enable bending of the flexible neck in a fourth direction and, preferably,
wherein the fourth direction is radially offset with respect to the third direction and, more preferably
wherein the fourth direction is perpendicular or substantially perpendicular to the third direction and, most preferably
wherein the third direction is parallel to the first direction and the fourth direction is parallel to the second direction.

6. The interdental device of any preceding claim wherein the first hinge is closer to the interdental cleaning element than the second hinge and, where present, the third and fourth hinges, and wherein
the spinal member extends into the flexible neck to an extent such that it does not extend as far as the hinge furthest from the first hinge.

7. The interdental device of claim 5 wherein the spinal member extends into the flexible neck to an extent beyond the first hinge, the second hinge, the third hinge and the fourth hinge.

8. The interdental device of claim 5 or any claim dependent on claim 5 wherein the spinal member extends into the flexible neck to an extent beyond the first hinge and the second hinge and terminates in line with the third hinge such that it does not extend as far as the fourth hinge.

9. The interdental device of any preceding claim wherein a tip of the flexible neck that is furthest from the handle and into which the end of the spinal member is received is tapered such that its diameter increases in a direction towards the handle.

10. The interdental device of any preceding claim wherein the spinal member comprises a twisted wire portion.

11. The interdental device of any preceding claim wherein the interdental cleaning element comprises a plurality of brush elements extending radially from the spinal member.

12. The interdental device of claim 11 when dependent on claim 10 wherein the brush elements are affixed between elements of the twisted wire portion.

13. The interdental device of claim 11 or claim 12 wherein the interdental cleaning element comprises brush elements of any one or more of the following: nylon; polyester; thermoplastic elastomer; polypropylene; flock; cloth; and silicone.

14. The interdental device of any preceding claim and further comprising a handle portion extending from the flexible neck in a direction away from the interdental cleaning element.

15. The interdental device of claim 14 wherein the handle portion, or at least a part of the handle portion, is co-moulded with the flexible neck.

## Patentansprüche

1. Interdentalvorrichtung, umfassend:
ein Interdentalreinigungselement, das ein sich entlang einer langgestreckten Achse erstreckendes Rückgratelement umfasst; und
einen flexiblen Hals, der sich entlang der langgestreckten Achse erstreckt und in dem ein Ende des Rückgratelements aufgenommen ist,
wobei der flexible Hals eine Mehrzahl von Scharnieren umfasst, wobei die Mehrzahl von Scharnieren umfasst:
ein erstes Scharnier, das konfiguriert ist, um ein Biegen des flexiblen Halses in einer zu der langgestreckten Achse senkrechten ersten Richtung zu ermöglichen; und
ein zweites Scharnier, das gegen das erste Scharnier axial versetzt ist und konfiguriert ist, um ein Biegen des flexiblen Halses in einer zweiten zu der langgestreckten Achse senkrechte Richtung zu ermöglichen;
wobei das Rückgratelement sich in den flexiblen Hals so weit hinein erstreckt, dass es sich über mindestens die Hälfte der Mehrzahl von Scharnieren hinaus erstreckt.

2. Interdentalvorrichtung nach Anspruch 1, bei der die zweite Richtung in Bezug auf die erste Richtung radial versetzt ist, und optional, bei der die zweite Richtung senkrecht oder im Wesentlichen senkrecht zu der ersten Richtung ist.

3. Interdentalvorrichtung nach einem der vorhergehenden Ansprüche, bei der:
das erste Scharnier eine erste Querschnittsverengung des flexiblen Halses in der ersten Richtung umfasst; und
das zweite Scharnier eine zweite Querschnittsverengung des flexiblen Halses in der zweiten Richtung umfasst und, vorzugsweise
bei der die erste und die zweite Querschnittsverengung verjüngt, vorzugsweise V-förmig sind.

4. Interdentalvorrichtung nach einem der vorhergehenden Ansprüche, die ferner ein drittes Scharnier umfasst, das konfiguriert ist, um ein Biegen des flexiblen Halses in einer dritten Richtung zu ermöglichen.

5. Interdentalvorrichtung nach Anspruch 4, die ferner ein viertes Scharnier umfasst, das gegen das dritte Scharnier axial versetzt ist und konfiguriert ist, um ein Biegen des flexiblen Halses in einer vierten Richtung zu ermöglichen, und, vorzugsweise
bei der die vierte Richtung in Bezug auf die dritte Richtung radial versetzt ist und,
vorzugsweise, bei der die vierte Richtung senkrecht oder im Wesentlichen senkrecht zu der dritten Richtung ist, und, am meisten bevorzugt,
bei der die dritte Richtung parallel zu der ersten Richtung und die vierte Richtung parallel zu der zweiten Richtung ist.

6. Interdentalvorrichtung nach einem der vorhergehenden Ansprüche, bei der das erste Scharnier näher an dem Interdentalreinigungselement liegt als das zweite Scharnier und, falls vorhanden, das dritte und vierte Scharnier, und bei der
das Rückgratelement sich so weit in den flexiblen Hals hinein erstreckt, dass es sich nicht bis zu dem Scharnier erstreckt, das am weitesten von dem ersten Scharnier entfernt ist.

7. Interdentalvorrichtung nach Anspruch 5, bei der sich das Rückgratelement über das erste, das zweite, das dritte und das vierte Scharnier hinaus in den flexiblen Hals erstreckt.

8. Interdentalvorrichtung nach Anspruch 5 oder einem von Anspruch 5 abhängigen Anspruch, bei der sich das Rückgratelement über das erste Scharnier und das zweite Scharnier hinaus in den flexiblen Hals erstreckt und in Höhe des dritten Scharniers endet, so dass es sich nicht bis zum vierten Scharnier erstreckt.

9. Interdentalvorrichtung nach einem der vorhergehenden Ansprüche, bei der eine Spitze des flexiblen Halses, die am weitesten vom Griff entfernt ist und in der das Ende des Rückgratelements aufgenommen ist, so verjüngt ist, dass ihr Durchmesser zum Griff hin zunimmt.

10. Interdentalvorrichtung nach einem der vorhergehenden Ansprüche, bei der das Rückgratelement einen verdrillten Drahtabschnitt umfasst.

11. Interdentalvorrichtung nach einem der vorhergehenden Ansprüche, bei der das Interdentalreinigungselement eine Mehrzahl von Bürstenelementen umfasst, die sich radial von dem Rückgratelement erstrecken.

12. Interdentalvorrichtung nach Anspruch 11 in Abhängigkeit von Anspruch 10, bei der die Bürstenelemente zwischen Elementen des verdrillten Drahtabschnitts befestigt sind.

13. Interdentalvorrichtung nach Anspruch 11 oder Anspruch 12, bei der das Interdentalreinigungselement Bürstenelemente aus einem oder mehreren der folgenden Materialien umfasst: Nylon; Polyester; thermoplastisches Elastomer; Polypropylen; Flocken; Stoff; und Silikon.

14. Interdentalvorrichtung nach einem der vorhergehenden Ansprüche, die ferner einen Griffabschnitt umfasst, der sich von dem flexiblen Hals in eine Richtung weg von dem Interdentalreinigungselement erstreckt.

15. Interdentalvorrichtung nach Anspruch 14, bei der der Griffabschnitt oder zumindest ein Teil des Griffabschnitts mit dem flexiblen Hals zusammengeformt ist.

## Revendications

1. Dispositif interdentaire comprenant :
un élément de nettoyage interdentaire comprenant un élément de colonne vertébrale s'étendant le long d'un axe allongé ;
un col flexible s'étendant le long de l'axe allongé et dans lequel est reçue une extrémité de l'élément de colonne vertébrale,
dans lequel le col flexible comprend une pluralité d'articulations, la pluralité d'articulations comprenant :
une première articulation configurée pour permettre une flexion du col flexible dans une première direction perpendiculaire à l'axe allongé ; et
une deuxième articulation déplacée axialement à partir de la première articulation et configurée pour permettre une flexion du col flexible dans une deuxième direction perpendiculaire à l'axe allongé ;
dans lequel l'élément de colonne vertébrale s'étend jusque dans le col flexible dans une mesure telle qu'il s'étend au-delà d'au moins la moitié de la pluralité d'articulations.

2. Dispositif interdentaire selon la revendication 1, dans lequel la deuxième direction est décalée radialement par rapport à la première direction et, facultativement, dans lequel la deuxième direction est perpendiculaire ou sensiblement perpendiculaire à la première direction.

3. Dispositif interdentaire selon l'une quelconque des revendications précédentes, dans lequel :
la première articulation comprend un premier rétrécissement de section transversale du col flexible dans la première direction ; et
la deuxième articulation comprend un second rétrécissement de section transversale du col flexible dans la deuxième direction et, de préférence,
dans lequel les premier et second rétrécissements de section transversale sont effilés, de préférence en forme de V.

4. Dispositif interdentaire selon l'une quelconque des revendications précédentes, comprenant en outre une troisième articulation configurée pour permettre une flexion du col flexible dans une troisième direction.

5. Dispositif interdentaire selon la revendication 4, comprenant en outre une quatrième articulation déplacée axialement par rapport à la troisième articulation et configurée pour permettre une flexion du col flexible dans une quatrième direction et, de préférence,
dans lequel la quatrième direction est décalée radialement par rapport à la troisième direction et, de manière plus préférée
dans lequel la quatrième direction est perpendiculaire ou sensiblement perpendiculaire à la troisième direction et, de la manière la plus préférée
dans lequel la troisième direction est parallèle à la première direction et la quatrième direction est parallèle à la deuxième direction.

6. Dispositif interdentaire selon l'une quelconque des revendications précédentes, dans lequel la première articulation est plus proche de l'élément de nettoyage interdentaire que la deuxième articulation et, lorsqu'elles sont présentes, les troisième et quatrième articulations, et dans lequel
l'élément de colonne vertébrale s'étend jusque dans le col flexible dans une mesure telle qu'il ne s'étend pas jusqu'à l'articulation la plus éloignée de la première articulation.

7. Dispositif interdentaire selon la revendication 5, dans lequel l'élément de colonne vertébrale s'étend dans le col flexible dans une mesure au-delà de la première articulation, de la deuxième articulation, de la troisième articulation et de la quatrième articulation.

8. Dispositif interdentaire selon la revendication 5 ou l'une quelconque des revendications dépendantes de la revendication 5, dans lequel l'élément de colonne vertébrale s'étend dans le col flexible dans une mesure au-delà de la première articulation et de la deuxième articulation et se termine dans l'alignement de la troisième articulation de telle sorte qu'il ne s'étend pas jusqu'à la quatrième articulation.

9. Dispositif interdentaire selon l'une quelconque des revendications précédentes, dans lequel une pointe du col flexible qui est la plus éloignée de la poignée et dans laquelle l'extrémité de l'élément de colonne vertébrale est reçue est effilée de telle sorte que son diamètre augmente dans une direction vers la poignée.

10. Dispositif interdentaire selon l'une quelconque des revendications précédentes, dans lequel l'élément de colonne vertébrale comprend une partie de fil torsadé.

11. Dispositif interdentaire selon l'une quelconque des revendications précédentes, dans lequel l'élément de nettoyage interdentaire comprend une pluralité d'éléments de brosse s'étendant radialement à partir de l'élément de colonne vertébrale.

12. Dispositif interdentaire selon la revendication 11 lorsqu'elle dépend de la revendication 10, dans lequel les éléments de brosse sont fixés entre des éléments de la partie de fil torsadé.

13. Dispositif interdentaire selon la revendication 11 ou la revendication 12, dans lequel l'élément de nettoyage interdentaire comprend des éléments de brosse parmi un quelconque ou plusieurs des matériaux suivants : nylon ; polyester ; élastomère thermoplastique ; polypropylène ; floc ; tissu ; et silicone.

14. Dispositif interdentaire selon l'une quelconque des revendications précédentes, et comprenant en outre une partie de poignée s'étendant à partir du col flexible dans une direction à l'écart de l'élément de nettoyage interdentaire.

15. Dispositif interdentaire selon la revendication 14, dans lequel la partie de poignée, ou au moins une partie de la partie de poignée, est co-moulée avec le col flexible.
